Europäisches Patentamt

European Patent Office

Office européen des brevets

(11) Publication number: 0 361 364
A2

## (12) EUROPEAN PATENT APPLICATION

(21) Application number: 89117682.8

(22) Date of filing: 25.09.89

(51) Int. Cl.⁵: C08J 5/04 , C08J 3/24 , //C08L81:02

(30) Priority: 26.09.88 US 249012

(43) Date of publication of application:
04.04.90 Bulletin 90/14

(84) Designated Contracting States:
AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: Stone, Mark Lee
305 Eastview Drive
Idaho Falls, ID 83401(US)
Inventor: Yu, Michael Chen-Cheu
208 NE Spruce
Bartlesville, OK 74006(US)
Inventor: Geibel, Jon Frederick
2600 E. Mountain Road
Bartlesville, OK 74003(US)

(74) Representative: Geissler, Bernhard, Dr. jur.,
Dipl.-Phys. Patent- und Rechtsanwälte et al
Bardehle-Pagenberg-Dost-
Altenburg-Frohwitter-Geissler & Partner
Postfach 86 06 20
D-8000 München 86(DE)

(54) Composites of fibrous reinforcing agent in air cured poly (arylene sulfide) matrix and production thereof.

(57) Polymeric composites are provided in which long or continuous fibrous reinforcing agent is surrounded by a matrix of poly(arylene sulfide) prepared as an air curable, linear polymer having a melt flow in the range of about 20 g/10 min to about 30,000 g/10 min and subsequently air cured to reduce the melt flow to 1 percent to 80 percent of the uncured value and within a range of about 1 g/10 min to about 500 g/10 min. Methods are also provided for producing composites by preparing air curable, linear poly(arylene sulfide) which is (a) air cured to reduce melt flow and combined with long or continuous fibrous reinforcing agent or (b) combined with long or continuous fibrous reinforcing agent and then air cured to reduce melt flow.

(500X)

TRANSVERSE FRACTURE SURFACE FROM RESIN B COMPOSITE
(INVENTION)

FIG. 2

# COMPOSITES OF FIBROUS REINFORCING AGENT IN AIR CURED POLY(ARYLENE SULFIDE) MATRIX AND PRODUCTION THEREOF

## Field of the Invention

This invention relates to polymeric composites and the production thereof. In one of its aspects the invention relates to composites of long or continuous fibrous reinforcing agent in a matrix of poly(arylene sulfide). In another aspect the invention relates to the use of linear poly(arylene sulfide) that is prepared having a specified range of melt flow and subsequently is air cured to reduce the range and melt flow. In still other aspects this invention relates to poly(phenylene sulfide) that is air curable and composites in which long or continuous fibrous reinforcing agent is embedded in a matrix of air cured poly(phenylene sulfide).

## Background of the Invention

Poly(arylene sulfide) (PAS) resins, more particularly poly(phenylene sulfide) (PPS) resins, are well known for thermal resistance, chemical resistance and an excellent balance of physical properties for use in the preparation of a variety of compositions. Recently the use of poly(arylene sulfide) in the matrix of thermoplastic composites has gained increasing importance not only for the desirable properties of temperature resistance and solvent resistance but also for the outstanding strength it imparts to such composites. The increased use of poly(arylene sulfide) in the production of composites has caused emphasis on research and development of further improvements of those properties of the resins that can lead to enhancement of composites in which the resins are used.

The optimum resin for poly(phenylene sulfide) composites requires not only suitable melt flow and solid state strength properties, but must also effectively bond to the reinforcing fiber. Toward the goal of enhanced resin-fiber bonding, recent research has led to variants of poly(phenylene sulfide). These resins display improved interfacial performance in carbon fiber compositions while the essential properties of processability, solvent resistance and heat resistance associated with poly(phenylene sulfide) are retained.

It is, therefore, an object of the present invention to provide a composite of long or continuous fibrous reinforcing agent in a poly(arylene sulfide) matrix that exhibits improved mechanical properties as compared to composites having poly(arylene sulfide) matrix that currently provide the standard for comparison. By long fibrous reinforcing agent is meant fibrous reinforcing agent in which the fiber is present in cut lengths typically greater than or equal to one inch and by continuous fibrous reinforcing agent is meant fibrous reinforcing agent which is produced and incorporated in essentially continuous lengths.

It is another object of this invention to provide a method for producing composites of long or continuous fibrous reinforcing agent in a poly(phenylene sulfide) matrix.

It is still another object of this invention to provide composites in which the matrix is effective in bonding with the reinforcing fiber.

It is a further object of this invention to provide composites which display effective interfacial interaction between matrix and reinforcing fiber without sacrificing the processability, solvent resistance and heat resistance of the composite.

## Summary of the Invention

In accordance with this invention there is provided a composition of matter that is a composite of long or continuous fibrous reinforcing agent in a matrix of poly(arylene sulfide) in which the poly(arylene sulfide) is originally prepared as an air curable, linear polymer having melt flow in the range of about 20 g/10 min to about 30,000 g/10 min and is subsequently reduced by air curing to melt flow in a range of about 1 g/10 min to about 500 g/10 min, so that the cured melt flow is about 1 percent to about 80 percent of the melt flow uncured.

In an embodiment of the invention, a method is provided for preparing a polymeric composite with long or continuous fibrous reinforcement in which (a) an air curable, linear poly(arylene sulfide) having melt flow in the range of about 20 g/10 min to about 30,000 g/10 min is prepared, (b) the linear poly(arylene sulfide) is subjected to air curing conditions to produce an at least partially air cured poly(arylene sulfide) having melt flow that is 1 percent to about 80 percent of the uncured melt flow and in the range of about 1 g/10 min to about 500 g/10 min, and (c) long or continuous fibrous reinforcing agent is surrounded with a matrix of the at least partially cured poly(arylene sulfide) to produce a composite.

## Brief Description of the Drawing

Figure 1 is a 500X enlargement of a microphotograph of a transverse tensile fracture surface of a composite that was not produced by the process of this invention.

Figure 2 is a 500X enlargement of a microphotograph of a transverse tensile fracture surface of a composite that was produced by the process of this invention.

## Detailed Description of the Invention

The poly(arylene sulfide) useful in this invention contains repeat units of the formula [Ar-S] wherein Ar is a divalent aromatic radical. The preferred divalent aromatic radical is phenylene.

The polymer is prepared as an air curable, linear polymer having melt flow in the range of about 20 g/10 min to about 30,000 g/10 min, preferably about 30 g/10 min to about 10,000 g/10 min, and most preferably about 50 g/10 min to about 5,000 g/10 min. Air curable, linear poly(arylene sulfide) having melt flow suitable for use in this invention can be produced by the method set out in U.S. Patent 3,354,129, incorporated herein by reference, by contacting at least one di-haloaromatic compound, at least one alkali metal sulfide and at least one organic amide under polymerization conditions for a time sufficient to form polymer.

Linear polymer suitable for use in this invention can also be produced by the method set out in U.S. Patent 3,919,177, incorporated herein by reference, by contacting at least one sulfur source, at least one di-haloaromatic compound, at least one organic amide, at least one base and at least one alkali metal carboxylate under polymerization conditions for a time sufficient to form polymer. Using alkali metal sulfide or alkali metal bisulfide as the sulfur source eliminates the need to use a base in the reaction mixture. The presence of alkali metal carboxylate in the reaction mixture results in polymer of higher molecular weight than is obtained without the alkali metal carboxylate as evidenced by higher inherent viscosity and lower melt flow of the polymer.

Contact of the reaction mixture components set out above for a time sufficient to obtain polymer at an elevated temperature of about 125°C (257°F) to about 450°C (842°F) by the process of U.S. 3,354,129 or of about 255°C (491°F) to about 450°C (842°F) by the process of U.S. 3,919,177 provides a linear polymer that can be cured by contact with air.

By the process of the present invention, air curable linear polymer is subjected to curing by contact with air to increase the molecular weight as evidenced by reduction of the melt flow of the polymer. Any suitable means for contacting polymer with air at elevated temperatures can be used, such as the melt curing techniques set out in U.S. 4,510,297, incorporated here by reference. Preferably, at present, polymer particles are placed in an agitated vessel such as a ribbon blender which is equipped with means, such as a hot oil jacket, by which a desired temperature can be maintained while a flow of air is passed through the particles as the bed is mechanically agitated. As the temperature of the polymer particles approaches the temperature of the heating medium, samples of polymer are tested to determine the melt flow. When a reduction of melt flow of about 1 percent to about 80 percent of the uncured melt flow is attained, the curing process is terminated, the polymer is cooled and collected. In the present process, a curing temperature in the range of about 204°C (400°F) to about 274°C (525°F), preferably about 232°C (450°F) to about 246°C (475°F) is the most commonly used. The time required for the curing operation is a function of the temperature used.

In the present invention, air curing treatment is carried out to attain a reduction of melt flow so that the melt flow falls within a range of about 1 g/10 min to about 500 g/10 min, preferably about 1 g/10 min to about 300 g/10 min, and most preferably about 5 g/10 min to about 250 g/10 min. A reduction in melt flow by the curing process and a melt flow after curing within the range set out above indicates that the polymer has been sufficiently treated that mechanical properties of the polymer have been enhanced.

The forming of a matrix of air cured poly(arylene sulfide) having long or continuous fibrous reinforcing

3

agent embedded therein can be accomplished by using as reinforcing agents long or continuous filaments made of any suitable fiber, particularly glass, carbon, aramid, metals, metalized fiber or combinations thereof. The reinforcing agent can be in the form of filaments, threads, rovings, mats, fabrics or other forms based on long or continuous filament.

Other additives that do not deleteriously affect the properties of the composites can be used in the present invention. Such additives as pigments, fillers, corrosion inhibitors and impact modifiers, among others, are suitable.

A matrix of air cured poly(arylene sulfide) can be applied to the reinforcing agent by such means as contact with melted polymer, impregnation with powdered polymer and subsequent melting of the polymer or slurry impregnation with evaporation of the carrying liquid and subsequent melting of the polymer, among others known in the art. Flowing of the molten polymer around the reinforcing agent and subsequent cooling produces a long or continuous filament reinforced prepreg which can be formed into finished articles by the processes of pultrusion, filament winding, and compression molding, among others. Examples of finished articles include such things as structural reinforcing members and pressure vessels.

## Example 1

This example demonstrates the use and advantage of cured PPS prepared using alkali metal carboxylate.

A sample of PPS was prepared by methods disclosed in U.S. 3,919,177. This sample had a melt flow, as prepared, as determined by ASTM D1238, Procedure B, Condition 315/5.0, of 107 g/10 min. This material was air cured by methods disclosed in U.S. 3,354,129 until the melt flow was 62 g/10 min. This cured PPS was then used to used to prepare a carbon fiber reinforced composite using the techniques disclosed in U.S. 4,680,224 incorporated herein by reference. This composite, hereinafter referred to as Composite I. was tested according to standard ASTM Procedures, the results of which are shown in Table I.

For comparison, the procedure detailed above was repeated except that the PPS used was a sample with a melt flow of 51 g/10 min of the type prepared without air curing using techniques disclosed in U.S. 4,282,347, incorporated herein by reference. The composite from this resin, hereinafter referred to as Composite II, was similarly tested, with results shown in Table I.

Table I

| Strength, ksi | Composite I | Composite II |
|---|---|---|
| Transverse Tensile | 6.2 | 4.0 |
| Longitudinal Tensile | 279 | 256 |
| Compressive | 143 | 114 |
| Flexural | 254 | 270 |

In Table I, the longitudinal tensile and flexural strengths of Composite I are, within the experimental error inherent in the test methods, equivalent to those of Composite II, while the transverse tensile and compressive strengths of Composite I show improvement over those of Composite II.

## Example 2

This example demonstrates the use and advantage of cured PPS prepared without alkali metal carboxylate in long fiber reinforced composites.

A sample of cured PPS was prepared by the methods disclosed in U.S. 3,354,129. This cured material had a flow rate, as determined by the method given in Example 1, of 49 g/10 min. The resin was used to prepare a carbon fiber reinforced composite as in Example 1. This composite, hereinafter called Composite III, was tested as in Example 1, with results listed in Table II. For comparison, Composite IV was prepared using the same procedure as for Composite III, but using a resin of melt flow 59 g/10 min of the type as that used for Composite II of Example 1. Properties of Compsoite IV are shown in Table II.

Table II

| Strength, ksi | Composite III | Composite IV |
|---|---|---|
| Transverse Tensile | 1.6 | 3.4 |
| Compressive | 185 | 129 |
| Flexural | 235 | 240 |

In Table II, the flexural strengths of the two materials are, within the experimental error inherent in the test methods, equivalent while the compressive strength of Composite III shows improvement over that of Composite IV and the transverse tensile strength of Composite III is not as good as that of Composite IV.

## Example 3

Several independent samples were prepared using each of resins denominated as A - a standard composite grade poly(phenylene sulfide) prepared without air curing; and B - poly(phenylene sulfide) prepared by the method of U.S. 3,919,177 and subsequently air cured in conformity with this invention. Prepregs were made using resins A and B in conjunction with a commercial carbon fiber, Amoco T-300, molded as 10"x10"x.062" unidirectional panels in a 625° F press, quick cooled in a room temperature press and subsequently annealed at 400° F for two hours. Strips were cut from the panels and composite properties measured by standard ASTM methods. Transverse properties of the composites are presented in Table III below.

Table III

| Transverse Properties of PPS-Carbon Fiber Composites | |
|---|---|
| Resin | Composite Transverse Tensile Strength (ksi) |
| A | 4.8 |
| B | 6.0-9.1 |

Transverse properties of unidirectional carbon fiber - reinforced composites based on the subject resins are given in Table III. Transverse strengths of composite based on resin B were uniformly higher than those based on resin A. Range of transverse strength represents results from several samples.

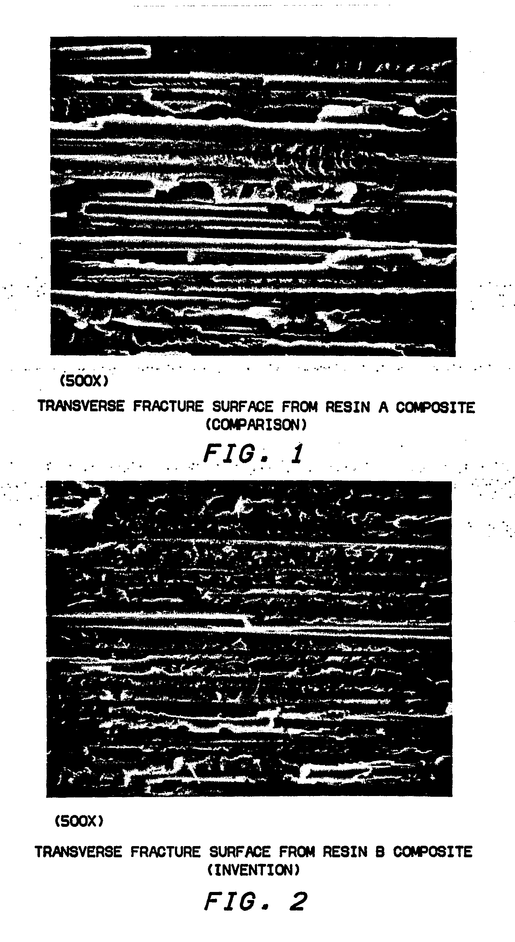

Transverse tensile fracture surfaces were prepared and examined microscopically to explain differences in the composite transverse strength. Referring now to the drawings, representative results are shown in Figures 1 and 2. Figure 1, representing resin A on T-300 fiber, showed many bare spots on the fibers, indicating less than optimal bonding of the resin to the fiber. Figure 2 representing resin B on T-300 fiber, showed increased signs of good resin-fiber adhesion, indicative of a strong resin-to-fiber bond.

## Claims

1. A method of preparing a polymer composite with fibrous reinforcement comprising:

   (a) preparing air curable, linear poly(arylene sulfide) having melt flow in the range of about 20 g/10 min to about 30,000 g/10 min,

   (b) reducing the melt flow of said poly(arylene sulfide) under air curing conditions to produce an at least partially air cured poly(arylene sulfide) having melt flow of about 1 percent to about 80 percent of the uncured melt flow and in the range of about 1 g/10 min to about 500 g/10 min, and

   (c) surrounding a sufficient amount of reinforcing agent chosen from the group consisting of long fibrous material and continuous fibrous material, with a matrix of said at least partially cured poly(arylene sulfide) to produce a composite of poly(arylene sulfide) with fibrous reinforcement.

2. A method of claim 1 wherein said linear poly(arylene sulfide) is one which has been produced by contacting at least one di-haloaromatic compound, at least one alkali metal sulfide, and at least one organic amide under polymerization conditions.

3. A method of claim 1 wherein said poly(arylene sulfide) is one which has been produced by contacting at least one sulfur source, at least one di-haloaromatic compound, at least one organic amide, at least one base and at least one alkali metal carboxylate under polymerization conditions.

4. A method of claim 1, 2 or 3 wherein said poly(arylene sulfide) is poly(phenylene sulfide).

5. A method of one of claims 1 - 4 wherein said air curable, linear poly(arylene sulfide) has melt flow within the range of about 30 g/10 min to about 10,000 g/10 min.

6. A method of one of claims 1 - 4 wherein said air curable, linear poly(arylene sulfide) has a melt flow within the range of about 50 g/10 min to about 5000 g/10 min.

7. A method of one of claims 1 - 4 wherin said at least partially air cured poly(arylene sulfide) has melt flow within the range of about 1 g/10 min to about 300 g/10 min.

8. A method of one of claims 1 - 4 wherein said at least partially air cured poly(arylene sulfide) has melt flow within the range of about 5 g/10 min to about 250 g/10 min.

9. A method of one of claims 1 - 8 wherein said fibrous reinforcing agent is chosen from the group consisting of glass, carbon, aramid, metal and metalized fiber.

10. A composition of matter comprising reinforcing agent chosen from the group consisting of long fibrous material and continuous fibrous material in a matrix of poly(arylene sulfide) said poly(arylene sulfide) characterized as (a) having been prepared as an air curable, linear polymer having melt flow in the range of about 20 g/10 min to about 30,000 g/10 min and (b) having been subsequently subjected to air curing conditions to reduce melt flow thereby producing an at least partially air cured poly having melt flow in a range of about 1 g/10 mn to about 500 g/10 min.

11. A composition of claim 10 wherein said linear poly(arylene sulfide) is one that has been produced by contacting at least one di-haloaromatic compound, at least one alkali metal sulfide, and at least one organic amide under polymerization conditions.

12. A composition of claim 10 wherein said poly(arylene sulfide) was produced by contacting at least one sulfur source, at least one di-haloaromatic compound, at least one organic amide, at least one base and at least one alkali metal carboxylate under polymerization conditions.

13. A composition of one of claims 10 - 12 wherein said poly(aryllene sulfide) is poly(phenylene sulfide).

14. A composition of claim 13 wherein said poly(arylene sulfide) is poly(phenylene sulfide).

(500X)

TRANSVERSE FRACTURE SURFACE FROM RESIN A COMPOSITE
(COMPARISON)

## FIG. 1

(500X)

TRANSVERSE FRACTURE SURFACE FROM RESIN B COMPOSITE
(INVENTION)

## FIG. 2